Europäisches Patentamt

European Patent Office

Office européen des brevets

(11) Veröffentlichungsnummer: **0 196 643**
B1

(12) # EUROPÄISCHE PATENTSCHRIFT

(45) Veröffentlichungstag der Patentschrift:
20.12.89

(51) Int. Cl.⁴: **B 62 D 49/06**, B 62 D 61/08

(21) Anmeldenummer: 86104331.3

(22) Anmeldetag: 28.03.86

(54) Selbstfahrendes landwirtschaftliches dreirädriges Schlepperfahrzeug.

(30) Priorität: 29.03.85 DE 3511647

(43) Veröffentlichungstag der Anmeldung:
08.10.86 Patentblatt 86/41

(45) Bekanntmachung des Hinweises auf die Patenterteilung:
20.12.89 Patentblatt 89/51

(84) Benannte Vertragsstaaten:
AT DE FR GB NL SE

(56) Entgegenhaltungen:
DE-C- 557 415
FR-A- 1 312 127
FR-A- 1 529 882
FR-A- 2 537 082
GB-A- 916 749
US-A- 3 438 454
US-A- 3 695 374

(73) Patentinhaber: Horsch Maschinen GmbH, Harburger Strasse 5, D-8380 Landau a.d. Isar (DE)

(72) Erfinder: Horsch, Michael, Sitzenhof 1,
D-8460 Schwandorf (DE)

(74) Vertreter: Wasmeier, Alfons, Dipl.-Ing. et al,
Patentanwälte Dipl.-Ing. A.Wasmeier Dipl.-Ing. H.Graf
Postfach 382 Greflinger Strasse 7,
D-8400 Regensburg 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

### Beschreibung

Die Erfindung betrifft selbstfahrende landwirtschaftliche dreirädrige Schlepperfahrzeuge, die zur Aufnahme von Bearbeitungsmaschinen, Ladebehältern oder dgl. Anbauen oder Aufbauten ausgebildet sind, und die als Zapfwellenfahrzeuge, als Zugschlepper und als Aufbaufahrzeuge bzw. Selbstfahrer einsetzbar sind. Das wichtigste Einsatzgebiet eines derartigen Fahrzeuges ist das einer selbstfahrenden Sämaschine. Weiterhin ist der Einsatz eines derartigen Fahrzeuges für die Bodenpflege allgemein von massgeblicher Bedeutung. Das Fahrzeug kann darüber hinaus auch für die übrigen Arbeiten, z.B. Zieh- und Schubarbeiten, die in der Landwirtschaft anfallen, verwendet werden.

Es sind sogenannte Mehrzweck-Schlepperfahrzeuge für den Einsatz in der Landwirtschaft bekannt, die aus einem Grundfahrzeug und einer Reihe von getrennt und unabhängig voneinander aufnehmbaren und auswechselbaren Anbaubzw. Aufbauvorrichtungen, z.B. Bearbeitungsmaschinen, Geräten, Ladebehältern und dgl. für verschiedene Arbeitsvorgänge bestehen. Da derartige selbstfahrende Fahrzeuge aus wirtschaftlichen Gründen für hohe Leistung ausgelegt und damit sehr stabil und mit hohem Gewicht gebaut sind, damit sie in der Lage sind, auch unter schwierigen Bodenverhältnissen mit Anbau- und Aufbaugeräten hoher Leistung zu arbeiten, sind diese Fahrzeuge in der Regel so ausgelegt, dass das Gesamtgewicht auf viele Räder verteilt wird, wobei wegen der häufig schwierigen Bodenverhältnisse in der Regel alle Räder angetrieben sind. Da das auf herkömmliche Räder ausgeübte Gesamtgewicht sehr hoch ist, und da alle linken und alle rechten Räder derartiger bekannter Fahrzeuge jeweils in einer Linie hintereinander angeordnet sind, ist der durch das Fahrzeug erzeugte Bodendruck sehr hoch und erreicht mit zunehmender Fahrzeuggrösse Werte, die wegen extrem hoher Bodenverdichtung nicht mehr vertretbar sind. Der Trend geht deshalb dahin, Grösse und Leistung derartiger Fahrzeuge wieder zu reduzieren, um den Bodendruck auf vertretbare Werte zu begrenzen, was jedoch die Wirtschaftlichkeit solcher Fahrzeuge (Kosten pro Leistungseinheit) herabsetzt, da bei kleineren Fahrzeugen entweder die Einsatzdauer grösser wird oder anstelle einer einzigen Maschine eine zweite, parallel arbeitende Maschine eingesetzt werden muss.

Es sind auch bereits Zugfahrzeuge bekannt, deren Hinterachse zwei im normalen Abstand und deren Vorderachse zwei in engem Abstand voneinander angeordnete Räder aufweist, die im Falle der Vorderräder als Doppel- oder Zwillingsräder ausgebildet sind. Solche Fahrzeuge haben Reifen normaler Breite, einen Rahmen herkömmlicher Art und aufgrund der Ausbildung der Doppelräder eine geringe Manövrierfähigkeit.

Ferner sind dreirädrige Zugfahrzeuge bzw. Geräteträger für die Saatbeetbereitung bekannt (DE-OS 3 232 293), bei denen die Hinterachse zwei und die lenkbare Vorderachse ein Laufrad aufweisen und die Breitreifen der Laufräder gemeinsam die volle Fahrzeugbreite überdecken. Vorderrad und Hinterräder sind durch einen Portalrahmen miteinander verbunden, der im Freiraum zwischen Vorderrad und Hinterrädern die Egge und den Saatgutbehälter aufnimmt, während die Hinterachse durch die Motor-Getriebe-Einheit belastet ist und die Kabine über der Hinterachse angeordnet ist. Ein derartiges Fahrzeug hat den Nachteil, dass der Antrieb des Fahrzeuges nur über die Hinterachse und über Getriebe erfolgt, was in der Praxis zu einem hohen Gewicht führt und bei Spezialbreitreifen grossen Durchmessers Probleme am Vorderrad bringt, dass es relativ lang ist, einen hochliegenden Schwerpunkt hat und dgl. mehr.

Aus der DE-OS 2 240 368 ist ein dreirädriger Schlepper bekannt, dessen drei Räder über einen tiefliegenden Motor angetrieben sind, der vor oder hinter dem mittleren Vorderrad angeordnet ist. Dieses Fahrzeug weist eine hochliegende Verstellachse auf, mit deren Hilfe der Abstand der Hinterräder auf die Reihenabstände bestimmter Kulturen einstellbar ist. Hierbei handelt es sich um ein dreirädriges Spezialfahrzeug leichter Bauweise mit veränderlichem Spurmass, das keine Breitreifen verwendet, dessen Räder von einem gemeinsamen Motor aus angetrieben sind, dessen Vorderrad nur in begrenztem Umfang lenkbar ist, und dessen Antrieb und Behälter an einem hohen Portalrahmen aufgehängt sind.

Schliesslich ist aus der US-PS 3 695 374 ein dreirädriges Fahrzeug der gattungsgemässen Art bekannt, bei dem zur Erzielung eines geringen Bodendruckes die Reifen als Breitreifen ausgebildet sind, wobei der Reifen des Vorderrades breiter ist als die Reifen der beiden Hinterräder. Der Rahmen eines derartigen Fahrzeuges ist als Rechteckrahmen ausgebildet, dessen Breite von vorne nach hinten durchgehend grösser ist als die Breite des Vorderreifens. Des weiteren ist das gelenkte Vorderrad aufgrund der konstruktiven Ausgestaltung des den Lenkausschlag ergebenden Antriebskolbens etwa nur um einen Winkel von ca. 20° nach links und rechts gegenüber der Fahrzeuglängsachse drehbar ausgebildet, so dass die Manövrierfähigkeit des Fahrzeuges sehr begrenzt ist.

Aufgabe der Erfindung ist es, ein Fahrzeug der gattungsgemässen Art so auszubilden, dass mit ihm der über die belasteten Räder auf den Boden ausgeübte Druck bei gegebener Fahrzeuggrösse und gegebenem Fahrzeuggewicht extrem niedrig gehalten wird, dass die Möglichkeit geschaffen wird, die durch die jeweiligen Anbauten oder Aufbauten auf das Fahrzeug einwirkende Belastung optimal zu verteilen, dass das Fahrzeug so lenkbar und manövrierbar ist, dass es um die Fahrzeughinterachse drehbar ist, dass das Fahrzeug insgesamt im Aufbau und in der Bedienung besonders einfach, in der Herstellung billig und im Einsatz extrem effektiv ist, und dass das Fahrzeug einen einfachen Allradantrieb sowie eine besonders günstige Raumausnutzung der Aufbauten besitzt.

Gemäss der Erfindung wird diese Aufgabe mit einem Fahrzeug gelöst, das gekennzeichnet ist durch die Kombination der Merkmale des Kennzeichens des Anspruches 1. Weitere Ausgestaltungen der Erfindung sind Gegenstand der Unteransprüche.

Durch die Verwendung extrem breiter Reifen von mindestens 1 m Breite und einem Durchmesser von mindestens 1,6 m wird erreicht, dass die Auflagefläche der Reifen auf dem Boden sehr gross ist und damit der Bodendruck aussergewöhnlich niedrig gehalten wird. Dadurch, dass die Hinterachse zwei Räder, die Vorderachse jedoch nur ein Rad, nämlich das gelenkte Rad aufweist, d.h. das Fahrzeug ein echtes Dreiradfahrzeug ist, wird des weiteren erreicht, dass der Innenabstand der beiden Räder der Hinterachse etwa gleich der Breite des Rades der Vorderachse bzw. Lenkachse wird, so dass die drei Räder auf drei parallelen Spuren laufen, die etwa aneinander anschliessen, so dass der von dem Fahrzeug auf den Boden ausgeübte Druck weitestgehend gleichmässig über die gesamte überfahrene Fläche verteilt wird, da die drei Räder bzw. Reifen der Räder gemeinsam die volle Breite des Fahrzeuges abdecken. Es wird deshalb das Gewicht des Fahrzeuges über besonders grosse Auflageflächen der Reifen auf den Boden übertragen, und die von den drei Rädern hinterlassenen Spuren verhindern, dass der Boden an einer Stelle von mehr als einem Rad verdichtet wird, im Gegensatz zu herkömmlichen Selbstfahrern, bei denen eine bestimmte Stelle des Bodens von dem Vorderrad und dem in dessen Spur laufendem Hinterrad nacheinander belastet wird, während der Zwischenraum zwischen den beiden Vorderrädern und den beiden Hinterrädern von dem Gesamtdruck des Fahrzeuges unbelastet ist.

Das um eine vertikale Achse gelenkig angeordnete Vorderrad, das das einzige lenkbare Rad des Fahrzeuges ist, wird durch Servoantrieb gesteuert und ist um einen Winkel bis zu 90° nach links und nach rechts in bezug auf die Längsachse des Fahrzeuges auslenkbar, so dass das Rad quergestellt werden und das Fahrzeug um die Mitte der Hinterachse drehen kann, was dem Fahrzeug eine ungewöhnliche Manövrierfähigkeit gibt. Das Vorderrad wird über einen eigenen Radnabenmotor direkt angetrieben, so dass eine Antriebsverbindung über Gelenkwellen und dgl. zu einem Hauptantrieb entfällt. Dies ergibt eine entscheidende Vereinfachung des Antriebes, verringert das Gesamtgewicht und verhindert, dass bei derartigen überbreiten Spezialreifen ein Wegrutschen des Reifens auftreten kann. Das Vorderrad ist in einer einseitigen Schwinge gelagert, so dass der schwere Breitreifen auf einfache Weise gewechselt werden kann.

Die Lenkung des Fahrzeuges über das Vorderrad erfolgt hydraulisch über einen von einer steuerbaren Hydraulikpumpe angetriebenen, doppelt wirkenden Hubzylinder, der am Rahmen befestigt ist und dessen Kolben ein Hebelgestänge beaufschlagt, das am Rahmen angelenkt ist und das einen Drehkranz beaufschlagt, der mit Hilfe von Stützrädern an der Lenkachse des Vorderrades befestigt ist, so dass das gelenkte Vorderrad durch Betätigung des doppelt wirkenden Hubzylinders über das den Drehkranz im Uhrzeigersinn oder entgegen dem Uhrzeigersinn drehende Hebelgestänge aus der Stellung, in der die Längsachse des Fahrzeuges mit der Achse des Vorderrades einen rechten Winkel einschliesst, stufenlos in die Stellung gedreht werden kann, in der die Längsachse des Fahrzeuges mit der Achse des Vorderrades zusammenfällt.

Um eine möglichst gleichmässige Verteilung des Gewichtes des Fahrzeuges mit Anbauten und Aufbauten auf die drei Räder und damit auf den überfahrenen Boden zu erreichen, ist das Fahrerhaus des Fahrzeuges auf dem Fahrgestell in Fahrzeuglängsrichtung verschiebbar ausgebildet, insbes. von der Mitte aus nach hinten und vorne über die gesamte Rahmenlänge verschiebbar. Damit wird an der Stelle des Fahrzeuges Freiraum geschaffen, an der ein Anbau oder Aufbau aufgesetzt wird. Das Fahrerhaus wird mit Hilfe eines Servoantriebes auf dem Fahrzeugrahmen verschoben oder mit Hilfe von Hydraulikzylindern über gelenkig gelagerte Stützhebel von einer Endstellung in eine entgegengesetzte Endstellung längs einer Teilkreisbahn bewegt; dabei ist eine stufenlose Verstellung der Lage des Fahrerhauses möglich. Sämtliche Steuerverbindungen des Fahrzeuges sind flexibel, so dass durch die unterschiedlichen Positionen, in die das Fahrerhaus auf dem Fahrzeug bewegt werden kann, die Steuerbarkeit des Fahrzeuges nicht beeinflusst wird. Entsprechende Steuerverbindungen sind in der Technik bekannt und sind an sich nicht Gegenstand der Erfindung.

Der Rahmen des Fahrzeuges ist ein schmaler Rahmen, z.B. ein sogenannter Wespentaillenrahmen. Im Hinblick auf die für die Strassenfahrt zulässige maximale Breite und die extrem breiten Reifen des Fahrzeuges hat der Rahmen eine Breite, die kleiner ist als die Breite eines Reifens, so dass der Rahmen einen Teil des zwischen den beiden Hinterrädern vorhandenen Platzes einnimmt und zwischen sich und dem benachbarten Reifen noch Freiraum für die Aufnahme eines Satteltankes oder dgl. lässt. Die Anbau- und Aufbaugeräte und -Vorrichtungen, die mit dem Fahrzeug für den jeweiligen Betrieb und Einsatz gekoppelt werden, sind Wechselanbauten bzw. Wechselaufbauten, die über Hubvorrichtungen, z.B. einen Flaschenzug, auf das Fahrzeug aufgesetzt und von ihm abgehoben werden, und die mit dem Fahrzeugrahmen über Schnellwechselvorrichtungen festgelegt werden. Die Aufnahme von Anbau- und Aufbaugeräten ist jedoch nur ein Anwendungsbereich des Fahrzeuges nach der Erfindung; ein besonders wichtiger Einsatz des Fahrzeuges ist ferner der Betrieb als Zapfwellenmaschine; Beispiel hierfür ist die Kopplung des erfindungsgemässen Fahrzeugs mit einer von der Zapfwelle aus angetriebenen und über die Dreipunktaufhängung des Fahrzeuges aufgenommene Sävorrichtung mit kombinierter Bodenbear-

beitungsvorrichtung nach DE-OS 3 247 884. Durch die Anordnung der Anbauten bzw. Aufbauten in Sattelbauweise ergibt sich eine besonders gute Übersichtlichkeit und Raumausnutzung, sowie ein tiefer Schwerpunkt. Dies wird massgeblich durch die Ausbildung des Rahmens als Wespentaillenrahmen erreicht.

Die einzelnen Räder des erfindungsgemässen Fahrzeuges sind über hydrostatische Radnabenmotoren angetrieben. Diese Radnabenmotoren sind Langsammotoren ohne Übersetzung, so dass ein ausserordentlich einfacher und energiesparender Antrieb geschaffen wird. Alle drei Räder werden in einem einzigen Kreislauf mit einer Pumpe (bzw. einer Doppelpumpe) parallel angetrieben, so dass auch die Steuerung des Antriebes der Räder besonders einfach, billig und effektiv ist.

Die entscheidenden Vorteile des erfindungsgemässen Dreirad-Fahrzeuges sind der aussergewöhnlich geringe Bodendruck, die extreme Manövrierfähigkeit des Fahrzeuges, die es gestattet, das Fahrzeug um einen Punkt der Hinterachse zu drehen (minimaler Wendekreis), die ungewöhnlich einfache Lenkübertragung, der hohe Wirkungsgrad des Antriebes der Räder, und die Verfügbarkeit praktisch der gesamten Rahmenoberseite für die Aufsattelung von Geräten oder Ladebehältern dadurch, dass das Fahrerhaus an eine beliebige Stelle auf dieser Oberfläche bewegt werden kann.

Nachstehend wird die Erfindung in Verbindung mit der Zeichnung anhand eines Ausführungsbeispieles erläutert. Es zeigt:

Fig. 1 eine schematische Seitenansicht eines Fahrzeuges nach der Erfindung,

Fig. 2 eine Aufsicht auf die Prinzipdarstellung nach Fig. 1,

Fig. 3 eine schematische Prinzipdarstellung der Lenkung des Fahrzeuges,

Fig. 4 eine schematische Schnittdarstellung des Rahmens mit Aufsatteltank,

Fig. 5 eine Prinzipdarstellung des Antriebes der Radmotoren, und

Fig. 6 eine Prinzipdarstellung der Verschiebbarkeit des Fahrerhauses.

Das Fahrzeug 1 weist ein Fahrgestell 2 auf, dessen Hinterachse zwei Räder 4, 5 und dessen Vorderachse 6 ein Einzelrad 7, das gelenkte Rad des Fahrzeuges, aufnimmt. Die Räder 4, 5 und 7 haben gleiche Dimension, das Einzelrad 7 kann jedoch wahlweise auch mit grösserer Breite ausgeführt sein. Die Räder 4, 5 und 7 sind Spezialräder mit extrem breiten Reifen; bei einer speziellen Ausführungsform der Erfindung beträgt die Reifenbreite 1000 mm bei einem Durchmesser von 1600 mm. Der Abstand der beiden Reifen 4 und 5 voneinander entspricht etwa der Breite des Reifens 7, so dass der von dem Fahrzeug auf den Boden ausgeübte Druck etwa gleichmässig in drei parallelen, unmittelbar aneinander anschliessenden Streifen auf den Boden übertragen wird und damit sichergestellt ist, dass der vom Fahrzeug auf den Boden ausgeübte Druck über die gesamte überfahrene Fläche etwa gleich gross ist und lediglich einen Bruchteil des Bodendruckes beträgt, der von einem Schlepper vergleichbarer Grösse und Leistung auf den überfahrenen Boden ausgeübt wird.

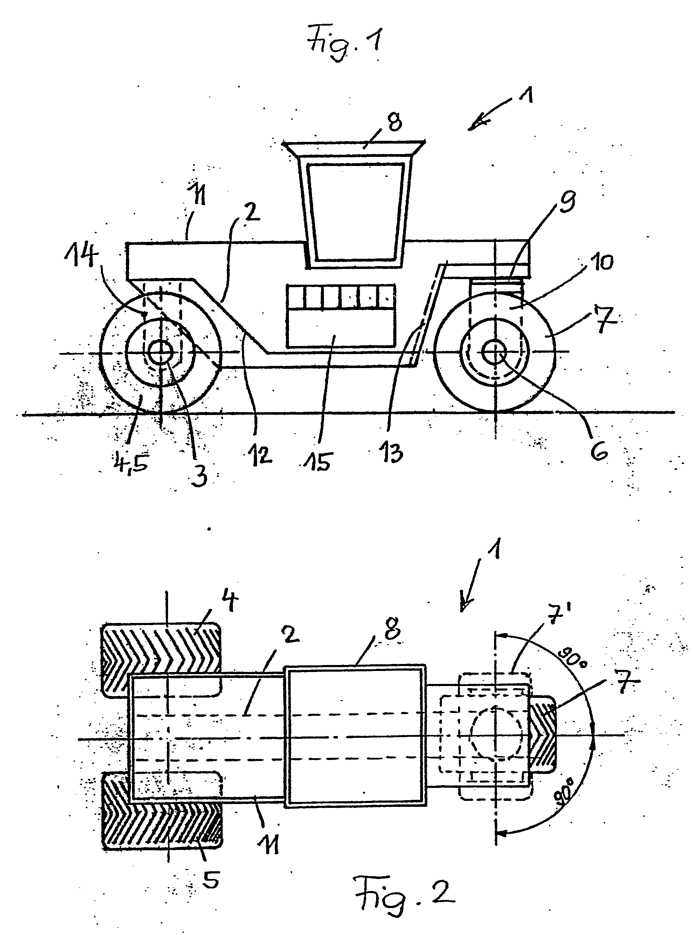

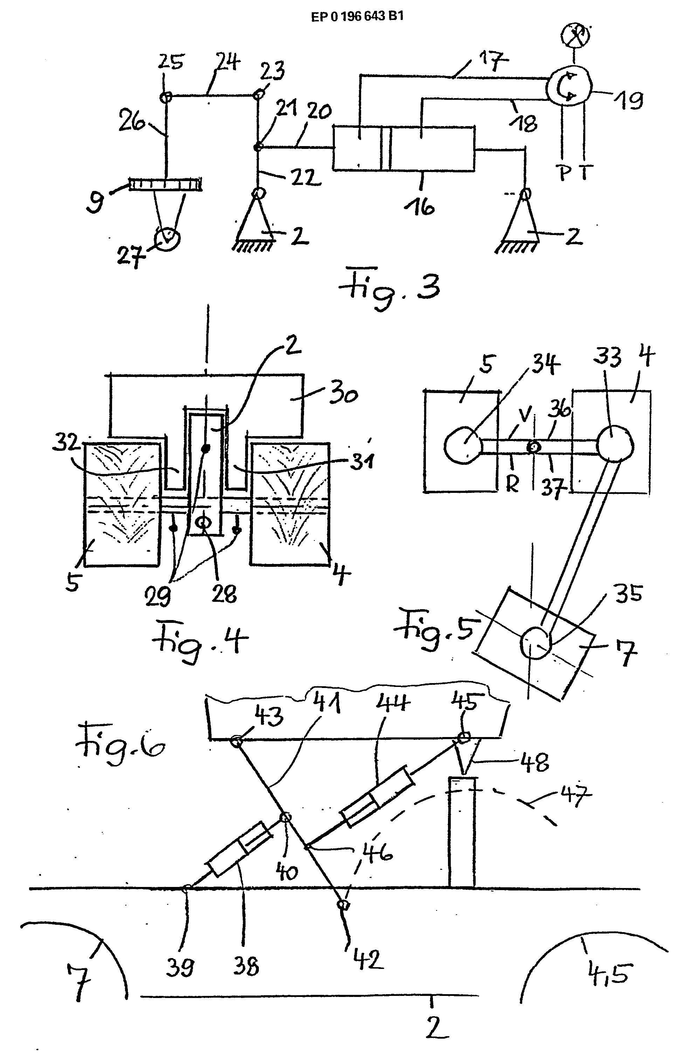

Das Vorderrad 7 ist über ein Drehgelenklager bzw. einen Drehkranz 9 und eine einseitige Schwinge 10, die mit der Achse 6 gelenkig gelagert sind, mit dem Fahrgestell bzw. Rahmen 2 verbunden. Wie in Fig. 2 mit 7' angedeutet, ist die Lagerung des gelenkten Rades 7 so ausgelegt, dass der Rad 7 stufenlos um maximal 90° nach links und 90° nach rechts aus der Längsachse drehbar ist. Das Drehgelenklager ist inbesonders zweckmässigerweise als Drehkranz ausgebildet, auf dem die Stützträger 10 starr befestigt sind, so dass der Drehweg des Drehkranzes direkt der Drehung des Vorderrades 7 entspricht. Diese Drehung des Drehkranzes 9 erfolgt hydraulisch, wie in Fig. 3 schematisch dargestellt ist. Das Fahrgestell 2 ist als Wespentaillenrahmen ausgebildet, der eine Breite hat, die kleiner ist als der Abstand der beiden Hinterräder. Der Aufbau 11 ist im Bereich der Hinterräder und Vorderräder bei 12 und 13 ausgespart, so dass er die Räder übergreift und im Bereich der hinteren Räder bis zur Höhe der Radachse zwischen den Aufhängungen 14 der Räder herabgezogen werden kann. Dieser Aufbau 11 kann praktisch als Satteltank oder dergl. ausgebildet sein oder aber zur Aufnahme eines entsprechenden Satteltankes dienen. Mit 8 ist in Fig. 1 und Fig. 2 das Fahrerhaus angedeutet, 15 bezeichnet den Antriebsmotor des Fahrzeuges unterhalb des Fahrerhauses.

Die Lenkverbindung des Vorderrades 7 ist schematisch in Fig. 3 dargestellt. Auf dem Rahmengestell 2 ist ein doppelt wirkender hydraulischer Hubzylinder 16 befestigt, dessen eine Kammer über die Leitung 17 und dessen andere Kammer 18 über die Leitung 18 mit einer Zweirichtungs-Förderpumpe 19 verbunden ist. Der Kolben 20 des Druckzylinders 16 ist gelenkig bei 21 mit einem am Rahmengestell 2 angelenkten Hebel 22 befestigt, der bei 23 mit einem Hebel 24 verbunden ist, dessen anderes Ende über das Gelenk 25 mit dem Hebel 26 verbunden ist, welcher direkt mit dem Drehkranz 9 in Eingriff steht, so dass der Arbeitshub des Kolbens 16 bzw. der Kolbenstange 20 über eine entsprechende Gestängeübertragung und -übersetzung direkt in eine Drehbewegung des Drehkranzes 9 und damit der Achse 27 des Vorderrades umgesetzt wird.

Das Rahmengestell 2 ist, wie in Fig. 4 schematisch dargestellt, zwischen den beiden Hinterrädern 4 und 5 angeordnet und nimmt sowohl die Zapfwelle 28, die von dem Fahrzeugmotor 15 angetrieben wird, wie auch die Dreipunktaufhängung 29 mit ihren beiden Unterlenkern und dem Oberlenker sowie einen Aufsatteltank 30 mit seitlich am Rahmengestell 2 nach abwärts gezogenen Sattelteilen 31 und 32 auf. Der Aufsatteltank 30 ist durch (nicht dargestellte) Schnellwechselkupplungen mit dem Rahmen 2 abnehmbar befestigt. Mit dem Schlepper gekuppelte Arbeitsgeräte werden von der Dreipunktaufhängung 29 aufgenommen und durch die Zapfwelle 28 angetrieben.

Wie in Fig. 5 schematisch dargestellt, sind die beiden Hinterräder 4, 5 und das Vorderrad 7 jeweils mit einem hydrostatischen Radnabenmotor 33, 34, 35 ausgerüstet, die an sich bekannte Langsammotoren ohne Übersetzung sind, und die parallel zueinander in einem Kreislauf 36, 37 geschaltet sind. Der Öldruck wird über eine einzige Einfach- oder Doppelpumpe für den gesamten Kreislauf gesteuert.

Nach Fig. 6 ist das Fahrerhaus so mit dem Rahmengestell 2 verbunden, dass ein Hubzylinder 38, der am Fahrgestell bei 39 gelenkig befestigt ist, bei 40 an eine Strebe 41 angelenkt ist, deren einer Endpunkt mit dem Rahmengestell bei 42 gelenkig verbunden ist, während das andere Ende bei 43 am Fahrerhaus 8 angelenkt ist. Des weiteren ist ein Hubzylinder 44 gelenkig bei 45 mit dem Fahrerhaus 8 und bei 46 gelenkig mit der Strebe 41 verbunden, so dass bei einer Betätigung der beiden Zylinder 38 und 44 das Fahrerhaus 8 in einer bogenförmigen Bahn 47 um den Gelenkpunkt 42 stufenlos bewegbar und einstellbar ist. Anstelle zweier Betätigungskolben 38 und 44 kann die Bewegung des Fahrerhauses 8 auch mit einem Kolben durchgeführt werden. Das Fahrerhaus 8 weist am Boden vorzugsweise Gummipuffer 48 auf, die mit den entsprechenden Stellen des Fahrgestells 2 zur Auflage kommen.

**Patentansprüche**

1. Selbstfahrendes landwirtschaftliches Schlepper-Dreiradfahrzeug, dessen Hinterachse zwei Aussenräder und dessen Vorderachse das dritte, mittlere und gelenkte Rad aufnimmt, wobei die Räder mit überbreiten Reifen bestückt sind und die Breite des Fahrzeuges etwa gleich der dreifachen Reifenbreite ist, und dessen Fahrgestellt Arbeitsmaschinen, Ladebehälter oder dergleichen Anbauten und Aufbauten aufnehmen kann, gekennzeichnet durch die Kombination folgender Merkmale:

(a) das gelenkte Rad (7) ist um maximal 90° nach links und nach rechts gegenüber der Fahrzeuglängsachse drehbar ausgebildet,

(b) das gelenkte Rad (7) ist mit Hilfe eines Radnabenmotors (35) hydraulisch angetrieben,

(c) das gelenkte Rad (7) ist in einer Schwinge (10) einseitig gelagert,

(d) alle drei Räder (4, 5, 7) des Fahrzeuges sind hydrostatisch angetrieben, und

(e) der Fahrzeugrahmen (2) ist im Bereich der Hinterräder (4, 5) als Portal-Wespentaillenrahmen ausgebildet, dessen Breite wesentlich kleiner als der Abstand der beiden Hinterräder (4, 5) ist.

2. Fahrzeug nach Anspruch 1, dadurch gekennzeichnet, dass die drei Räder (4, 5, 7) parallel zueinander durch eine Hydraulikpumpe (19) in einem einzigen hydraulischen Kreislauf (16, 17, 18) angetrieben sind.

3. Fahrzeug nach Anspruch 1 oder 2, dadurch gekennzeichnet, dass der Antrieb der Räder (4, 5, 7) mit Hilfe von Langsammotoren ohne Übersetzung erfolgt.

4. Fahrzeug nach Anspruch 1, dadurch gekennzeichnet, dass die Lenkanordnung für das gelenkte Rad (7) einen Hydraulikkreis (17), einen doppelt wirkenden Hubzylinder (16), ein mit der Kolbenstange befestigtes Hebelgestänge (24), einen Drehkranz (9) und einen Stützträger (10) zur Verbindung des Drehkranzes (9) mit der Radachse (27) aufweist.

5. Fahrzeug nach Anspruch 1, dadurch gekennzeichnet, dass der Rahmen einen abnehmbaren Satteltank (30) aufnimmt.

6. Fahrzeug nach einem der Ansprüche 1 bis 5, dadurch gekennzeichnet, dass der Fahrzeugmotor (15) in Fahrzeugmitte unterhalb des mittig angeordneten Fahrerhauses (8) angeordnet ist.

7. Fahrzeug nach Anspruch 1, dadurch gekennzeichnet, dass das Fahrerhaus (8) durch an dem Rahmen (2) angeordnete Hubzylinder (38, 44), die mit Stützen (41) zwischen Fahrerhaus (8) und Rahmen (2) befestigt sind, verschiebbar bzw. hebbar ist.

8. Fahrzeug nach einem der Ansprüche 1 bis 7, dadurch gekennzeichnet, dass das Fahrerhaus (8) in Richtung der Längsachse des Fahrzeuges verschiebbar angeordnet ist.

**Claims**

1. Automotive agricultural three-wheeled tractor vehicle, whose rear axle receives two outer wheels and whose front axle receives the third, middle and steered wheel, the wheels being provided with overwide tyres and the vehicle width is roughly the same as three times the tyre width and whose chassis can receive machinery, loading containers or similar built-on and attached means, characterized by the combination of the following features:

(a) the steered wheel (7) can be rotated by max 90° to the left and right with respect to the vehicle longitudinal axis,

(b) the steered wheel (7) is hydraulically driven with the aid of a wheel hub motor (35),

(c) the steered wheel (7) is mounted on one side in a rocker arm (10),

(d) all three vehicle wheels (4, 5, 7) are hydrostatically driven and

(e) the vehicle frame (2) is constructed in the vicinity of the rear wheels (4, 5) as a gantry "wasp-waist" frame, whose width is significantly smaller than the spacing of the two rear wheels (4, 5).

2. Vehicle according to claim 1, characterized in that the three wheels (4, 5, 7) are driven parallel to one another by a hydraulic pump (19) in a single hydraulic circuit (16, 17, 18).

3. Vehicle according to claims 1 or 2, characterized in that the drive of vehicles (4, 5, 7) takes place with the aid of a slow-speed motor without gearing.

4. Vehicle according to claim 1, characterized in that the steering means for the steered wheel (7) has a hydraulic circuit (17), a double-acting lift cylinder (16 ), a leverbar (24) fixed to the piston rod, a slewing ring (9) and a carrier support (10) for connecting slewing ring (9) to the axle (27).

5. Vehicle according to claim 1, characterized in that the frame receives a removable saddle tank (30).

6. Vehicle according to one of the claims 1 to 5, characterized in that the vehicle motor (15) is positioned in the centre of the vehicle below the centrally arranged cab (8).

7. Vehicle according to claim 1, characterized in that the cab (8) can be moved or raised by lift cylinders (38, 44) arranged on frame (2) and which are fixed by supports (41) between the cab (8) and frame (2).

8. Vehicle according to one of the claims 1 to 7, characterized in that the cab (8) is displaceably arranged in the direction of the vehicle longitudinal axis.

## Revendications

1. Tracteur agricole tricycle automoteur dont l'essieu arrière reçoit deux roures extérieures et l'essieu avant la troisième roue médiane et dirigée, les roues étant équipées de pneus extralarges et la largeur du véhicule étant environ égale au triple de la largeur de pneu, et dont le châssis peut recevoir des machines productrices de travail, des réservoirs de chargement ou des constructions ou structures ajoutées ou montées analogues, caractérisé par la combinaison des caractéristiques suivantes:

a) la roue dirigée (7) est agencée de manière à pouvoir tourner de 90° au maximum vers la gauche ou la droite par rapport à l'axe longitudinal du véhicule,

b) la roue dirigée (7) est entraînée hydrauliquement au moyen d'un moteur au moyeu de roue (35),

c) la roue dirigée (7) est montée unilatéralement sur un organe oscillant (10),

d) toutes les trois roues (4, 5, 7) du véhicule sont entraînées hydrostatiquement, et

e) le châssis du véhicule (2) est agencé dans la zone des roues arrière sous forme de châssis à taille de guêpe à portique, dont la largeur est sensiblement inférieure à l'écartement des deux roues arrière (4, 5).

2. Tracteur selon la revendication 1 caractérisé en ce que les trois roues (4, 5, 7) sont entraînées parallèlement l'une à l'autre par une pompe hydraulique (19) dans un seul circuit hydraulique (16, 17, 18).

3. Tracteur selon la revendication 1 ou 2 caractérisé en ce que l'entraînement des roues (4, 5, 7) a lieu au moyen de moteurs lents sans démultiplication.

4. Tracteur selon la revendication 1 caractérisé en ce que le dispositif de direction pour la roue dirigée (7) comporte un circuit hydraulique (17), un vérin hydraulique à double effet (16 ), une tringlerie (24) montée sur la tige de piston, une couronne de pivotement (9) et un support (10) reliant la couronne de pivotement (9) à l'essieu ou l'axe de roue (27).

5. Tracteur selon la revendication 1 caractérisé en ce que le châssis reçoit un réservoir (30) amovible.

6. Tracteur selon l'une des revendications 1 à 5 caractérisé en ce que le moteur du tracteur (15) est disposé au milieu du véhicule au-dessous de la cabine du conducteur (8) disposée au milieu.

7. Tracteur selon la revendication 1 caractérisé en ce que la cabine du conducteur (8) est déplaçable ou levable au moyen de vérins montés sur le châssis (2), ces vérins étant montés au moyen de supports (41) entre la cabine du conducteur et le châssis (2).

8. Tracteur selon l'une des revendications 1 à 7 caractérisé en ce que la cabine du conducteur (8) est disposée de manière déplaçable en direction de l'axe longitudinal du véhicule.

Fig. 1

Fig. 2

Fig. 3

Fig. 4

Fig. 5

Fig. 6